Europäisches Patentamt

European Patent Office

Office européen des brevets

(11) Veröffentlichungsnummer: **0 258 644**

**A1**

## EUROPÄISCHE PATENTANMELDUNG

(21) Anmeldenummer: **87111082.1**

(22) Anmeldetag: **31.07.87**

(51) Int. Cl.4: **A01B 19/06** , A01B 23/02

(30) Priorität: **02.09.86 DE 3629848**

(43) Veröffentlichungstag der Anmeldung:
**09.03.88 Patentblatt 88/10**

(84) Benannte Vertragsstaaten:
**BE CH FR GB LI LU NL**

(71) Anmelder: **Amazonen-Werke H. Dreyer GmbH & Co. KG**
**Am Amazonenwerk 9-13**
**D-4507 Hasbergen-Gaste(DE)**

(72) Erfinder: **Gattermann, Bernd**
**Eichenwall 3**
**D-2872 Hude i.O.(DE)**

(54) **Rüttelegge.**

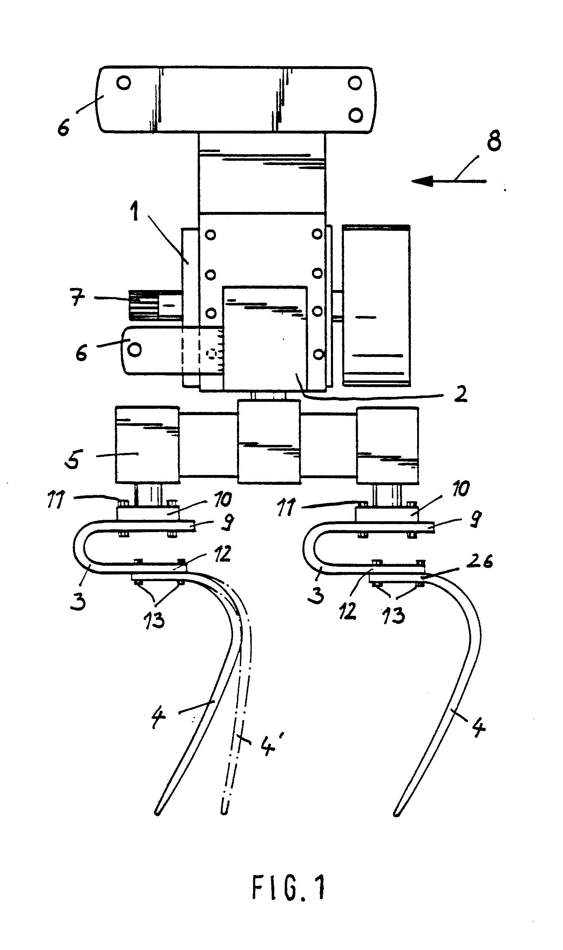

(57) Rüttelegge mit zumindest zwei hintereinander angeordneten Eggenbalken, die über einen Drehschwingungsmechanismus in hin-und hergehende Schweingungen quer zur Fahrtrichtung versetzt werden und an denen Zinken befestigt sind. Um die Rüttelegge wesentlich für den Einsatz auf steinigen Böden zu verbessern, sind die Zinken (4) als Blattfedern ausgebildet und weisen quer zur Fahrtrichtung (8) eine wesentlich größere Querschnittslänge als in Fahrtrichtung (8) auf (Fig. 1).

FIG. 1

EP 0 258 644 A1

## Rüttelegge

Die Erfindung betrifft eine Rüttelegge gemäß des Oberbegriffes des Patentanspruches 1.

Eine derartige Rüttelegge ist durch die deutsche Offenlegungsschrift 19 64 571 bekannt. Bei dieser bekannten Rüttelegge sind die Zinken aus einem Vierkantstahl hergestellt und an ihrem Ende spitz zulaufend ausgeschmiedet. Die Zinken sind über gebogene Blattfedern an den über einen Drehschwingungsmechanismus in quer zur Fahrtrichtung hin-und hergehenden Schwingungen versetzten Eggenbalken befestigt. Aufgrund der Anbringung der Eggenzinken an diesen gebogenen Blattfedern könne die Zinken beim Auftreffen auf im Boden festsitzenden Hindernissen entgegen der Fahrtrichtung ausweichen, so daß in Normalfällen Beschädigungen und Zinkenbrüche vermieden werden. Nun hat die Praxis jedoch gezeigt, daß durch die Anbringung von Zinken an federnden Elementen unter schwierigsten Bedingungen nicht in jedem Fall Zinkenbrüche vermieden werden.

Der Erfindung liegt daher die Aufgabe zugrunde, die bekannte Rüttelegge wesentlich für den Einsatz auf steinigen Böden zu verbessern.

Diese Aufgabe wird erfindungsgemäß durch das Kennzeichen des Patentanspruches 1 gelöst. Aufgrund der Ausbildung der Zinken selbst als Blattfeder wird gewährleistet, daß die Zinken beim Auftreffen auf im Boden festsitzenden Hindernissen, wie Steine ect. elastisch nach hinten ausweichen können und so über das im Boden festsitzende Hindernis hinweggleiten können, ohne daß es zu Schäden an den Zinken kommt. Dadurch, daß die als Blattfedern ausgebildeten Zinken quer zur Fahrtrichtung eine wesentlich größere Querschnittslänge als in Fahrtrichtung aufweisen, ist gewährleistet, daß die Zinken in jedem Falle die gleichen hin-und hergehenden Schwingungen wie der Eggenbalken selbst ausführen können. Somit wird auch auf sehr harten Böden eine gute Bodenbearbeitung und Krümelung des Bodens durch die Zinken der erfingungsgemäßen Rüttelegge erreicht.

Durch die Maßnahme des Patentanspruches 2 erhält man eine günstige Form der Zinken mit geringstem Materialeinsatz. Durch die gekrümmte Ausbildung des Zinkens und unterschiedliche Krümmungen des Zinkens sind verschiedene Formen des erfindungsgemäßen Zinkens in einfacher Weise herstellbar.

In einer bevorzugten Ausführungsform ist vorgesehen, daß zumindest in dem unteren Teil des Zinkens eine Abkantung sich befindet, so daß der Zinken in seinem unteren Teil einen winkelförmigen Querschnitt aufweist. Hierdurch wird einerseits eine sehr gute Krümelung des Bodens durch den Zinken erreicht und andererseits erreicht man durch diese Abkantung zumindest im unteren Bereich bei geringstem Materialeinsatz eine relativ große Stabilität des Zinkens.

Weitere Einzelheiten der Erfindung sind den übrigen Unteransprüchen, der Beispielsbeschreibung und den Zeichnungen zu entnehmen. Hierbei zeigen

Fig. 1 eine erfindungsgemäß ausgebildete Rüttelegge in der Seitenanspicht,

Fig. 2 einen erfindungsgemäßen Rütteleggenzinken in der Seitenansicht,

Fig. 3 einen anderen erfindungsgemäßen Rütteleggenzinken in der Seitenansicht,

Fig. 4 einen anderen Rütteleggenzinken in der Seitenansicht,

Fig. 5 einen erfindungsgemäßen Rütteleggenzinken in der Vorderansicht und in gestreckter Darstellung,

Fig. 6 der Querschnitt des Zinkens gemäß Fig. 5 in der Ansicht VI - VI,

Fig. 7 den Zinken gemäß Fig. 5 in der Ansicht VII - VII und

Fig. 8 den Zinken gemäß Fig. 5 in der Ansicht VIII -VIII.

Die Rüttelegge besteht im wesentlichen aus der Getriebeeinheit 1, dem an der Getriebeeinheit 1 festgeschraubten Tragrahmen 2 und den beiden hintereinander angeordneten Eggenbalken 3, die mit den Bodenbearbeitungszinken 4 besetzt sind. Die Eggenbalken 3 sind mit Hilfe der Schwingen 5 an dem Tragrahmen 2 angeordnet. Die Rüttelegge wird mit Hilfe der Dreipunktkupplung 6 mit dem Dreipunktkraftheber eines Ackerschleppers gekoppelt. Hinter der Rüttelegge läßt sich in bekannter und daher nicht dargestellter Weise eine nachlaufende Walze sowie eine Drillmaschine anordnen. Der Antrieb der Eggenbalken 3 erfolgt über die an die Eingangswelle 7 der Getriebeeinheit 1 angeschlossenen Gelenkwelle von der Zapfwelle eines Ackerschleppers. Die Drehbewegung der Eingangswelle 7 wird durch den in der Getriebeeinheit 1 angeordneten Taumelkörpertrieb in eine drehschwingende Bewegung umgewandelt und auf die Schwinge 5 übertragen. Diese drehschwingende Bewegung versetzt die Eggenbalken in eine quer zur Fahrtrichtung der Maschine hin-und hergehende Bewegung. Durch diese hin-und hergehende Bewegung der Eggenbalken 3 wird der Boden durch die Zinken 4 gekrümelt. Die Eggenbalken 3 sind als U-förmige Längsträger ausgebildet, wobei sich die offene Seite der Längsträger sich jeweils auf der der Fahrtrichtung 8 abgewandten Seite befindet. An dem oberen Schenkel 9 der Eggenbalken 3 sind die Halterungen 10 der Schwingen 5 mittels der Schrauben 11 angeordnet, während an dem gegenüberliegenden unteren Schenkel 12 die Zinken 4 mittels der Schrauben 13 befestigt sind. Die U-förmigen Eggenbalken 3 sind jeweils über ihre ganze Länge auf ihrer Rückseite offen. Die Eggenbalken 3 sind aus Federstahl hergestellt und nach dem Einstanzen der Löcher für die Befestigung der Schwingenhalterung 10 und der Zinken 4 gehärtet.

Der Zinken 4 ist als Blattfeder ausgebildet und weist quer zur Fahrtrichtung eine wesentlich größere Querschnittslänge als in Fahrtrichtung auf, was anhand der Fig. 5 bis 8 noch näher erläutert wird. Aufgrund dieser Ausbildung des Zinkens 4 kann der Zinken beim Auftreffen auf im Boden festsitzenden Hindernissen aus der mit durchzogenen Linien dargestellten Position in die mit strichpunktierten Linien dargestellte Position 4' nach hinten schwenken und so Hindernissen ausweichen.

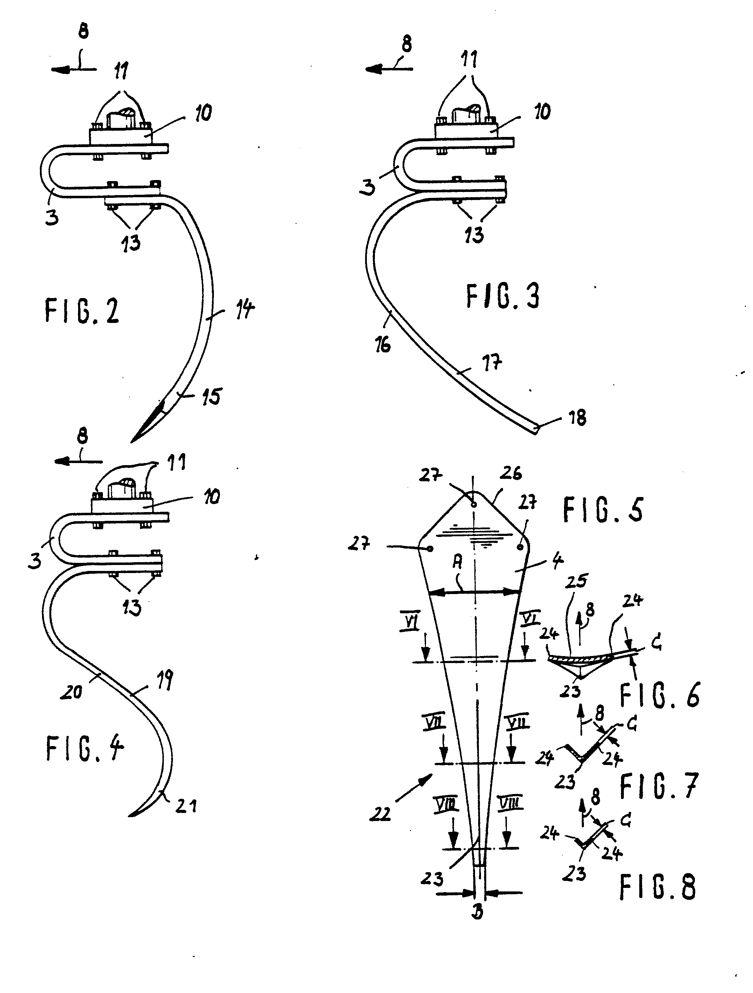

In der Fig. 2 ist ein anderer Zinken dargestellt. Dieser Zinken 14 weist eine gekrümmte Form auf. Der untere Bearbeitungsteil 15 des Zinkens 14 ist auf Griff gestellt. Auch der Zinken 14 ist als Blattfeder ausgebildet und weist quer zur Fahrtrichtung eine wesentlich größere Querschnittslänge als in Fahrtrichtung auf. Darüber hinaus weist der Bodenbearbeitungsteil des Zinkens 14 in Fahrtrichtung gesehen eine sich nach unten verjüngende dreieckförmige bzw. trapezförmige Form auf, was anhand der Fig. 5 bis 8 noch näher erläutert wird.

Der Zinken 16 gemäß Fig. 3 weist das Bearbeitungsteil 17 auf, dessen Spitze 18 gegenüber dem Bearbeitungsteil 17 des Zinken 16 nacheilend ausgebildet ist. Der Zinken 16 ist also "auf Schlepp" gestellt. Der Zinken 16 ist ebenfalls als Blattfeder ausgebildet und weist quer zur Fahrtrichtung eine wesentlich größere Querschnittslänge als in Fahrtrichtung 8 auf,.

Der Zinken 19 gemäß Fig. 4 weist quer zur Fahrtrichtung 8 gesehen eine S-förmig gekrümmte Form auf. Der Zinken 19 ist derart gekrümmt, daß der obere Bearbeitungsteil 20 schräg nach hinten unten und die untere freie Zinkenspitze 21 etwa vertikal verläuft bzw. "auf Griff" gestellt ist. Auch der Zinken 19 ist als Blattfeder ausgebildet und weist quer zur Fahrtrichtung 8 eine wesentlich größere Querschnittslänge als in Fahrtrichtung 8 auf.

Die Fig. 5 zeigt die Zinken gemäß den Fig. 1 bis 4 in der Ansicht von vorne und in gestreckter Länge. Der Zinken 4 ist als Blattfeder ausgebildet und weist quer zur Fahrtrichtung 8 in seinem oberen Bereich die Querschnittslänge A und in seinem unteren Bereich die Querschnittslänge B auf. Die Querschnittslänge A im oberen Bereich des Zinkens ist größer als die Querschnittslänge B im unteren Bereich des Zinkens. Hierdurch weist der Bearbeitungsteil 22 des Zinkens 4 eine sich nach unten verjüngende dreieckförmige bzw. trapezförmige Form auf. Des weiteren sind die Querschnittslängen A und B quer zur Fahrtrichtung 8 wesentlich größer als die Querschnittslänge C in Fahrtrichtung gesehen. Der Zinken 4 bzw. das Bodenbearbeitungsteil 22 ist also wesentlich breiter als dick. Hierdurch ist gewährleistet, daß der Zinken quer zur Fahrtrichtung relativ stabil ist, während er relativ leicht beim Auftreffen auf im Boden festsitzenden Hindernissen nach hinten ausweichen kann. Das Bearbeitungsteil 22 des Zinkens 4 weist in seinem unteren Teil des Zinkens die Abkantung 23 auf, so daß der Zinken in seinem unteren Teil, wie in den Fig. 7 bis 8 dargestellt ist, einen winkelförmigen Querschnitt aufweist. Um eine gute Krümelwirkung zu erreichen, sind die äußeren Kanten 24 des Bearbeitungsteiles 22 des Zinkens 4 in Fahrtrichtung 8 gesehen nach vorn angestellt, während sich die Abkantung 23 auf der Rückseite des Zinkens in bezug auf die Fahrtrichtung 8, befindet. Hierdurch wird eine gute Krümelung des Bodens erreicht. Im oberen Bereich des Bearbeitungsteiles 22 weist der Zinken 4 keine Abkantung 23 mehr auf, sondern die Abkantung 23 geht, wie Fig. 6 zeigt, in die Krümmung 25 über. An seinem oberen Ende weist der Zinken 4 das Befestigungsteil 26 auf, welches mit den drei Bohrungen 27 versehen ist, über die der Zinken 4 mit den Schrauben 13 an dem unteren Schenkel 12 des Eggenbalkens 3 anzuschrauben ist. Das Befestigungsteil 26 des Zinkens 4 wird gegenüber dem Bearbeitungsteil 22, wie beispielsweise Fig. 1 zeigt, abgebogen.

## Ansprüche

1. Rüttelegge mit zumindest zwei hintereinander angeordneten Eggenbalken, die über einen Drehschwingungsmechanismus in hin-und hergehende Schwingungen quer zur Fahrtrichtung versetzt werden und an denen Zinken befestigt sind, dadurch gekennzeichnet, daß die Zinken (4,14,16,19) als Blattfedern ausgebildet sind und quer zur Fahrtrichtung (8) eine wesentlich größere Querschnittslänge (A,B) als in Fahrtrichtung (8) aufweisen.

2. Rüttelegge nach Anspruch 1, dadurch gekennzeichnet, daß die Bodenbearbeitungsteile der Zinken (4,14) in Fahrtrichtung (8) gesehen eine sich nach unten verjüngende dreieckförmige bzw. trapezförmige Form aufweisen.

3. Rüttelegge nach Anspruch 1 oder 2, dadurch gekennzeichnet, daß die Zinken (14) gekrümmt ausgebildet sind.

4. Rüttelegge nach Anspruch 3, dadurch gekennzeichnet, daß die Zinken (19) derart gekrümmt sind, daß der obere Bearbeitungsteil (20) schräg nach hinten - unten und die untere freie Zinkenspitze (21) zumindest etwa vertikal verläuft.

5. Rüttelegge nach Anspruch 4, dadurch gekennzeichnet, daß der untere Bearbeitungsteil (15) des Zinkens (14) "auf Griff" gestellt ist.

6. Rüttelegge nach Anspruch 1, dadurch gekennzeichnet, daß zumindest in dem unteren Teil des Zinkens (4) sich eine Abkantung (23) befindet, so daß der Zinken in seinem unteren Teil einen winkelförmigen Querschnitt aufweist.

# FIG. 1

Amazonen - Werke H. Dreyer GmbH & Co. KG

FIG.2

FIG.3

FIG.4

FIG.5

FIG.6

FIG.7

FIG.8

Amazonen - Werke H. Dreyer GmbH & Co. KG

Europäisches Patentamt

# EUROPÄISCHER RECHERCHENBERICHT

Nummer der Anmeldung

EP 87 11 1082

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-1 327 424 (DUPLER) <br> * Seite 1, Zeilen 18-26; Seite 2, Zeilen 24-51; Abbildungen 3,4 * <br> --- | 1-3,5 | A 01 B 19/06 <br> A 01 B 23/02 |
| X | BE-A- 521 888 (MIDLAND INDUSTRIES) <br> * Seite 1, Zeilen 1-15; Seite 2, Zeilen 15-22; Seite 3, Zeilen 41-52; Abbildungen 1,3-5 * <br> --- | 1,2,5 | |
| A | US-A-3 827 505 (SOSALLA) <br> * Abbildung 1 * <br> --- | 4,5 | |
| A | DE-C- 79 980 (KRÄMER) <br> * Insgesamt * <br> --- | 6 | |
| A | EP-A-0 142 750 (AMAZONEN) <br> --- | | |
| A,D | DE-A-1 964 571 (FREUDENDAHL) <br> ----- | | |

RECHERCHIERTE SACHGEBIETE (Int. Cl.4)

A 01 B

Der vorliegende Recherchenbericht wurde für alle Patentansprüche erstellt

| Recherchenort | Abschlußdatum der Recherche | Prüfer |
|---|---|---|
| DEN HAAG | 12-11-1987 | VON ARX V.U. |